(19) Europäisches Patentamt / European Patent Office / Office européen des brevets

(11) **EP 2 527 660 B1**

(12) **FASCICULE DE BREVET EUROPEEN**

(45) Date de publication et mention
de la délivrance du brevet:
**08.01.2014 Bulletin 2014/02**

(51) Int Cl.:
***F15B 15/28*** *(2006.01)*     ***F15B 20/00*** *(2006.01)*
***G01L 1/00*** *(2006.01)*

(21) Numéro de dépôt: **12003792.4**

(22) Date de dépôt: **14.05.2012**

(54) **Procédé de détermination de l'effort statique développé par une servocommande**

Verfahren zur Bestimmung der statischen Kraft, die von einer Servosteuerung entwickelt wird

Method for determining the static force developed by a servocontrol

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.05.2011 FR 1101611**

(43) Date de publication de la demande:
**28.11.2012 Bulletin 2012/48**

(73) Titulaire: **EUROCOPTER**
**13725 Marignane Cédex (FR)**

(72) Inventeur: **Bihel, Jean-Romain**
**13740 Le Rove (FR)**

(74) Mandataire: **GPI & Associés**
**EuroParc de Pichaury**
**Bâtiment B2 - 1er Etage**
**1330 Rue Guillibert de la Lauzière**
**13856 Aix en Provence Cedex 3 (FR)**

(56) Documents cités:
**WO-A1-2008/095525     US-A1- 2004 128 868**
**US-A1- 2010 294 125**

**Description**

La présente invention concerne un procédé de détermination de l'effort statique développé par une servocommande.

Classiquement, un aéronef comporte des organes de manoeuvre manoeuvrables par un pilote, tels que les pales d'un rotor de sustentation d'un giravion de type hélicoptère ou encore des gouvernes de direction d'un avion par exemple.

A l'aide de commandes de vol, le pilote manoeuvre donc les organes de manoeuvre de l'aéronef. Toutefois, les efforts à fournir sont parfois très importants pour déplacer ces organes de manoeuvre.

Par suite, la chaîne cinématique reliant une commande de vol à un organe de manoeuvre est souvent munie d'un système hydraulique comprenant une servocommande permettant au pilote de gouverner l'aéronef sans difficulté et avec précision.

Plus particulièrement, un hélicoptère est muni d'un rotor principal assurant sa sustentation et sa propulsion. Pour diriger l'hélicoptère, un pilote modifie le pas des pales du rotor principal, c'est-à-dire leurs incidences par rapport à l'écoulement d'air incident.

Par suite, le giravion comporte un ensemble de plateaux cycliques pourvu d'un plateau inférieur non tournant et d'un plateau supérieur tournant, cet ensemble étant parfois plus simplement dénommé « plateau cyclique ». Le plateau inférieur non tournant est relié aux commandes de vol du pilote, généralement par trois lignes de commande distinctes alors que le plateau supérieur tournant est relié à chaque pale respectivement par une bielle. Le plateau cyclique coulisse ainsi le long du mât du rotor principal pour commander le pas général des pales du rotor principal tout en pouvant osciller dans tous les sens autour d'une rotule pour commander le pas cyclique des pales.

Les oscillations et le déplacement vertical du plateau cyclique, commandés par le pilote, sont donc à l'origine de la variation du pas des pales permettant au pilote de diriger l'hélicoptère.

Classiquement, le pilote commande le plateau cyclique via des commandes mécaniques liées à ce plateau cyclique par des bielles. Toutefois, les efforts à exercer par le pilote pour manoeuvrer le plateau cyclique sont très importants, en particulier si la masse du giravion est également importante.

Par conséquent, une servocommande d'un système hydraulique est alors agencée entre une portion amont et une portion aval de chaque chaîne cinématique de commande. Le pilote sollicite alors les servocommandes sans efforts particuliers via la portion amont, puis ces servocommandes retranscrivent l'ordre du pilote et agissent sur la portion aval de la chaîne cinématique.

De même, un hélicoptère est pourvu d'un rotor arrière dont le pas des pales peut être modifiable via une servocommande.

Bien entendu, il en va de même pour des ailerons ou des volets d'avions, par exemple, manoeuvrés via des servocommandes.

On note que certains aéronefs modernes comportent des commandes de vol électriques qui remplacent les liaisons mécaniques reliant les commandes de vol aux servocommandes.

De façon usuelle, les servocommandes comportent un vérin muni d'au moins un corps externe de forme cylindrique dans lequel translate un élément coulissant muni d'une tige de puissance équipée d'un piston de commande. Ce piston de commande délimite une chambre de rétraction et une chambre d'extension à l'intérieur de ce corps externe.

De plus, la servocommande comporte un distributeur hydraulique alimentant en fluide la chambre de rétraction ou la chambre d'extension suivant l'ordre reçu. Le déplacement du piston de commande de l'élément coulissant par rapport au corps externe est alors commandé par le distributeur hydraulique qui est actionné par les commandes de vol du pilote de l'hélicoptère, au travers de la portion amont d'une chaîne cinématique. En fonction des ordres donnés, le distributeur hydraulique alimente en fluide hydraulique la chambre de rétraction ou la chambre d'extension pour requérir la rétraction ou l'extension de la servocommande.

On comprend que l'on appelle dans la suite du texte « chambre de rétraction » une chambre provoquant la rétraction de la servocommande lorsque ladite chambre est remplie par un fluide. A l'inverse, on appelle « chambre d'extension » une chambre provoquant l'extension de la servocommande lorsque ladite chambre est remplie par un fluide.

La servocommande peut de plus comprendre un dispositif d'asservissement, éventuellement intégré au distributeur hydraulique.

Deux modes de réalisation des servocommandes coexistent alors.

Selon un premier mode de réalisation, la tige de puissance est fixée sur un point fixe de l'aéronef appartenant par exemple à une boîte de transmission de puissance, le corps se déplaçant en fonction des ordres reçus et étant reliée à la portion aval de la chaîne cinématique. L'homme du métier dénomme ce type de servocommande selon l'expression « servocommande à corps mobile ».

A contrario, selon un deuxième mode de réalisation, le corps est fixé à un point fixe de l'aéronef, la tige de puissance se déplaçant en fonction des ordres reçus et étant relié à la portion aval de la chaîne cinématique. L'homme du métier dénomme donc ce type de servocommande selon l'expression « servocommande à corps fixe ».

En outre, quel que soit le mode de réalisation, on connait des servocommandes dénommées à « simple corps » ou à « double corps » par l'homme du métier.

Une servocommande à simple corps est alors munie d'un vérin pourvu d'un corps définissant un unique espace interne délimitant une chambre de rétraction et une chambre d'extension séparées par un piston de commande. La chambre de rétraction et la chambre d'extension sont alors alimentées par un distributeur hydraulique muni d'une unique unité hydraulique. Cette servocommande remplit parfaitement sa fonction. Néanmoins, pour des raisons de sécurité, l'homme du métier tend, à partir d'un certain niveau d'effort à développer, à utiliser une servocommande au moins à double corps.

Une servocommande à double corps comporte alors un vérin pourvu d'un corps inférieur et d'un corps supérieur assemblés en tandem ou en parallèle.

Par exemple, une servocommande à double corps en tandem comprend un élément coulissant muni d'une tige de puissance portant deux pistons, chaque piston délimitant dans chaque corps une chambre de rétraction et une chambre d'extension.

De plus, deux unités hydrauliques du distributeur hydraulique, actionnées par un levier de commande commun relié aux commandes du pilote, alimentent respectivement les chambres de rétraction et d'extension des corps inférieur et supérieur.

Il existe par ailleurs des servocommandes munies de trois corps, voire plus.

Durant un vol à grande vitesse, des évolutions extrêmes de l'aéronef peuvent introduire des contraintes mécaniques importantes dans la structure résistante de l'aéronef. Au-delà de facteurs de charge donnés, il y a un risque d'endommagement de cette structure.

Pour prévenir le pilote que l'aéronef atteint une limite d'évolution, il est possible de prévoir un dispositif de détection d'effort statique limite sur une servocommande. Lorsque l'effort statique exercé sur la servocommande atteint un seuil limite, à savoir un effort statique de traction ou un effort statique de compression, le dispositif de détection d'effort statique limite déclenche une alerte pour en informer le pilote.

Classiquement, le dispositif de détection d'effort statique limite comprend un élément de détection muni d'une tige équipée d'un piston de détection coulissant dans un espace de détection, cet espace de détection comprenant deux chambres de détection délimitées par le piston de détection, indépendantes des chambres de rétraction et d'extension du corps externe. La première chambre de détection est alimentée en fluide par le circuit hydraulique de l'aéronef, la deuxième chambre de détection débouchant sur l'extérieur de la servocommande.

De plus, la tige de l'élément de détection saille du corps de la servocommande pour être reliée à la portion aval de la chaîne cinématique par exemple. Cette partie saillante de l'élément de détection comprend en outre un levier apte à coopérer avec un interrupteur à poussoir.

En dessous du seuil limite, la pression régnant dans la chambre de détection maintient le piston de détection en butée haute de manière à éloigner son levier de l'interrupteur. Par contre lorsque le seuil est atteint, la pression régnant dans la chambre de détection ne permet plus de maintenir le piston de détection en butée haute. Le piston de détection atteint donc une butée basse, le levier actionnant alors l'interrupteur.

Afin d'éviter un passage du fluide de la première chambre de détection vers l'extérieur de la servocommande, le piston de détection comporte un joint. Ce joint étant sollicité dynamiquement, des fuites vers l'extérieur de la servocommande peuvent apparaître et conduire à des actions de maintenance.

De plus, le dispositif de détection d'effort statique limite est soumis aux efforts subis par la servocommande en étant relié à la chaîne cinématique de commande. Dès lors, il est dimensionné pour pouvoir supporter lesdits efforts. Il en résulte un coût financier et une masse non négligeables.

Enfin, le coulissement du piston de détection induit de fait un jeu dans la chaîne cinématique de commande en cas de chute de pression dans le circuit hydraulique alimentant en fluide le dispositif de détection d'effort statique limite.

On connaît aussi une servocommande pourvue d'au moins un dispositif de détection d'effort limite. Ce dispositif comporte un carter solidaire d'un corps de la servocommande, le carter délimitant un espace de détection. De plus, un organe mobile partage cet espace de détection en une première chambre de détection débouchant sur un espace interne dudit corps et en une deuxième chambre de détection. Enfin, le dispositif possède un moyen de détection de la position de l'organe mobile dans l'espace de détection.

L'état de la technique inclut de plus le document WO 2008/ 095525, le document US 2004/0128868 et le document US 2010/0294125

La présente invention a alors notamment pour objet de proposer un procédé et une servocommande alternatifs permettant notamment de s'affranchir des limitations mentionnées précédemment.

L'invention vise alors un procédé de détermination de l'effort statique développé par une servocommande munie d'un vérin et d'un distributeur hydraulique, ce vérin comprenant au moins un corps délimitant un espace interne et un élément coulissant muni d'un piston de commande coulissant dans ledit espace interne, le distributeur hydraulique alimentant l'espace interne avec un fluide. Le piston de commande sépare favorablement l'espace interne du corps en une chambre de rétraction et une chambre d'extension, un distributeur hydraulique alimentant la chambre de rétraction pour rétracter la servocommande et alimentant la chambre d'extension pour étendre la servocommande. Ce procédé est notamment remarquable en ce que :

- on détermine la vitesse de déplacement courante relative de l'élément coulissant par rapport au corps de la servocommande, et

- on détermine l'effort statique à l'aide :

- de la première relation suivante lorsque la vitesse de déplacement courante est positive :

$$F = F_{max} * [1 - (\frac{V^2}{V^2_{max}})],$$

- de la deuxième relation suivante lorsque la vitesse de déplacement courante est négative :

$$F = -F_{max} * [1 - (\frac{V^2}{V^2_{max}})],$$

où « F » représente ledit effort statique développé par la servocommande, « $F_{max}$ » représente un effort statique maximal prédéterminé développable par la servocommande, « $V^2$ » représente la vitesse de déplacement courante à la puissance deux, « $V^2_{max}$ » représente une vitesse de déplacement maximale de l'élément coulissant par rapport audit corps à la puissance deux et par exemple pour une ouverture courante au moment des mesures du distributeur hydraulique servant à alimenter en fluide ledit espace interne, « * » représente le signe de la multiplication, « - » représente le signe de la soustraction.

On comprend que la servocommande peut être une servocommande comprenant un corps ou une pluralité de corps.

De plus, on note qu'il est possible de mesurer la vitesse de déplacement courante en déterminant le déplacement du corps sur une servocommande à corps mobile, ou encore en déterminant le déplacement de l'élément coulissant sur une servocommande à corps fixe.

Dès lors, le distributeur hydraulique comportant une ouverture à section variable pour alimenter une chambre de l'espace interne, la vitesse de déplacement maximale Vmax correspond à la vitesse de déplacement de l'élément coulissant en l'absence d'un effort statique appliqué sur la servocommande.

Selon la variante, la vitesse de déplacement maximale Vmax peut être une constante, voire être considérée comme une variable dépendant de la section courante de la section variable voire de la température du fluide. On comprend que l'on entend par « section courante », la valeur de la section variable à chaque instant, à savoir en temps réel.

De manière générale, on qualifie de « courant » la valeur d'un paramètre en temps réel.

Ainsi, selon ce procédé, il n'est pas nécessaire de munir une servocommande d'un dispositif de détection d'effort statique limite selon l'art antérieur. En utilisant des paramètres de fonctionnement de la servocommande, il devient possible de déterminer l'effort statique exercé sur cette servocommande, et d'en déduire si cet effort statique dépasse un seuil le cas échéant.

Ce procédé peut comporter en complément une ou plusieurs des caractéristiques additionnelles qui suivent.

Ainsi, selon un aspect de l'invention :

- on détermine la vitesse de déplacement courante de l'élément coulissant par rapport au corps de la servocommande à l'aide d'un capteur de mesure de la vitesse de déplacement,

- un calculateur comprenant un processeur et une mémoire principale stockant des instructions relatives à ladite première relation et ladite deuxième relation, on détermine l'effort statique à l'aide desdites première et deuxième relations en exécutant lesdites instructions avec ce processeur.

Par exemple, le capteur de mesure de la vitesse de déplacement peut être :

- un capteur de mesure d'une vitesse en tant que tel,

- un capteur de position transmettant une information de déplacement relative à la longueur du déplacement de l'élément coulissant par rapport audit corps, cette information de déplacement étant dérivée par rapport au temps pour obtenir ladite vitesse de déplacement,

- un capteur d'accélération transmettant une information d'accélération relative à l'accélération de l'élément coulissant ou du corps selon le type de servocommande, cette information d'accélération étant intégrée par rapport au temps pour obtenir ladite vitesse de déplacement.

Selon une variante, on détermine ladite vitesse de déplacement courante V en temps réel en déterminant un débit dudit fluide à l'aide d'un moyen de mesure du débit usuel, puis en divisant ledit débit par la surface d'une section constante du piston. On note que le débit peut être le débit du fluide au travers du distributeur hydraulique.

Par ailleurs, la vitesse de déplacement maximale peut selon une variante être une constante prédéterminée par le constructeur, correspondant éventuellement à la vitesse maximale de déplacement de l'élément coulissant lorsque l'ouverture du distributeur hydraulique alimentant le vérin est maximale et à une température maximale de la plage d'utilisation du fluide envisagée.

Selon une variante, le distributeur hydraulique communiquant avec l'espace interne par une ouverture à section variable, ce distributeur hydraulique comprenant un moyen de restriction mobile pour ajuster la section variable, on peut déterminer une valeur courante de la section variable du distributeur hydraulique.

Ainsi, on peut établir une base de données par essais donnant la vitesse de déplacement maximale en fonction de la valeur de la section courante et de la température du fluide, cette valeur correspondant par exemple à la position du moyen de restriction. Le calculateur détermine alors la valeur courante de la section variable et en déduit la vitesse de déplacement maximale à l'aide de cette base de données.

Selon une réalisation préférée, on détermine toutefois la vitesse de déplacement maximale $V_{max}$ en temps réel à l'aide de l'équation suivante :

$$ V_{\mathrm{max}} = C_q * S_1 * \frac{\sqrt{(\frac{2}{\rho}) * (P_{in} - P_{out})}}{S_0} $$

où « $C_q$ » représente un coefficient de perte de charge prédéterminé du distributeur hydraulique , « $S_1$ » représente la valeur courante de la section variable, « $\rho$ » représente la masse volumique du fluide alimentant la servocommande, « $P_{in}$ » représente la pression d'alimentation du fluide entrant dans le distributeur hydraulique, « $P_{out}$ » représente la pression de sortie du fluide sortant du distributeur hydraulique, « $S_0$ » représente la surface d'une section constante du piston, « * » représente le signe de la multiplication.

On note que la pression de sortie représente la pression du fluide sortant du distributeur hydraulique, soit de fait la pression du fluide présent dans une chambre de l'espace interne alimentée par le distributeur hydraulique

On note en outre que le coefficient de perte de charge $C_q$ correspond à la perte de charge du distributeur hydraulique entre l'entrée et la sortie de ce distributeur hydraulique, ce coefficient étant établi par essais et pouvant être variable en fonction de la température du fluide, par exemple. De même, la masse volumique du fluide peut être une constante prédéterminée, ou une variable établie en fonction de ladite température du fluide.

Par suite, un processeur d'un calculateur exécute par exemple des instructions pour déterminer la valeur courante de la section variable, en utilisant un capteur de position ou de mouvement du moyen de restriction voire d'un levier de commande du distributeur hydraulique, par exemple. La section courante de l'ouverture du distributeur hydraulique dépendant directement de la position du moyen de restriction, le calculateur peut aisément déterminer cette section courante.

Le calculateur en déduit alors la vitesse de déplacement maximale puis l'effort statique exercé sur la servocommande.

En outre, on note que la pression de sortie du distributeur hydraulique peut être établie à partir de la pression d'entrée du distributeur hydraulique, à l'aide éventuellement d'une équation dite « équation de pression » par commodité.

Toutefois, selon une variante préférée visant à simplifier le procédé tout en conservant une précision acceptable, on considère que la pression de sortie est proportionnelle à la pression d'entrée, le rapport de proportionnalité étant déterminé par essais par exemple. Eventuellement, la pression de sortie est égale à la moitié de la pression d'entrée.

En effet, on constate de manière surprenante que lorsque l'élément coulissant se déplace par rapport au corps à la vitesse de déplacement maximale, cette approximation s'avère exacte. Pour une servocommande symétrique, la pression de sortie devient plus précisément égale à la moitié de la pression d'entrée.

Par ailleurs, le coefficient de perte de charge et la masse volumique peuvent être des constantes prédéterminées.

Cependant, selon une variante, on peut mesurer la température du fluide, le coefficient de perte de charge et la masse volumique étant déterminés en fonction de cette température du fluide.

Un calculateur peut déterminer le coefficient de perte de charge et cette masse volumique à l'aide de bases de données, de courbes mémorisées, ou encore d'équations fournissant ce coefficient de perte de charge et cette masse volumique en fonction de ladite température.

Selon un autre aspect, on déclenche une alerte lorsque l'effort statique dépasse un seuil prédéterminé.

Par exemple, le calculateur déclenche une alerte de type sonore ou visuelle. On comprend qu'il est possible de réaliser d'autres post-traitements suite à la détermination de l'effort statique.

Outre un procédé, l'invention vise un dispositif mettant en oeuvre ce procédé.

Ainsi, l'invention vise un dispositif de détermination de l'effort statique développé par une servocommande munie d'un vérin et d'un distributeur hydraulique, ce vérin comprenant au moins un corps délimitant un espace interne et un élément coulissant muni d'un piston de commande coulissant dans l'espace interne, ce distributeur hydraulique alimentant l'espace interne avec un fluide. Ce dispositif est notamment remarquable en ce qu'il comporte :

- un capteur de mesure de la vitesse de déplacement courante de l'élément coulissant par rapport au corps de la servocommande,

- un calculateur muni d'un processeur et d'une mémoire principale comportant des instructions, le processeur exécutant ces instructions pour déterminer l'effort statique à l'aide :

• de la première relation suivante lorsque la vitesse de déplacement courante est positive :

$$F = F_{\max} * [1 - (\frac{V^2}{V_{\max}^2})],$$

- de la deuxième relation suivante lorsque la vitesse de déplacement courante est négative :

$$F = -F_{\max} * [1 - (\frac{V^2}{V_{\max}^2})],$$

où « F » représente l'effort statique développé par la servocommande, « $F_{\max}$ » représente un effort statique maximal prédéterminé développable par ladite servocommande, « $V^2$ » représente la vitesse de déplacement courante à la puissance deux, « $V_{\max}^2$ » représente la vitesse de déplacement maximale de l'élément coulissant par rapport au corps à la puissance deux, « * » représente le signe de la multiplication, « - » représente le signe de la soustraction.

Il est à noter que ce dispositif peut être implémenté sur des servocommandes existantes, ces servocommandes étant généralement munies d'un capteur de mesure de la vitesse de déplacement de l'élément coulissant par rapport au corps.

Selon un autre aspect, le dispositif peut comporter un moyen d'alerte relié au calculateur, le processeur exécutant les instructions mémorisées pour solliciter le moyen d'alerte lorsque l'effort statique dépasse un seuil prédéterminé.

En outre, l'invention vise une servocommande munie d'un vérin et d'un distributeur hydraulique, la servocommande comprenant au moins un corps délimitant un espace interne et un élément coulissant muni d'un piston de commande coulissant dans l'espace interne, le distributeur hydraulique alimentant l'espace interne avec un fluide.

Cette servocommande est notamment remarquable en ce qu'elle comporte un dispositif selon l'invention tel que décrit précédemment.

De plus, l'invention vise un aéronef muni d'une telle servocommande.

L'invention et ses avantages apparaîtront avec plus de détails dans le cadre de la description qui suit avec des exemples de réalisation donnés à titre illustratif en référence aux figures annexées qui représentent :

- la figure 1, un schéma montrant un aéronef selon l'invention,

- la figure 2, un schéma présentant une servocommande muni d'un dispositif de détermination d'un effort statique selon l'invention, et

- les figures 3 à 5, des schémas explicitant le procédé selon l'invention.

Les éléments présents dans plusieurs figures distinctes sont affectés d'une seule et même référence.

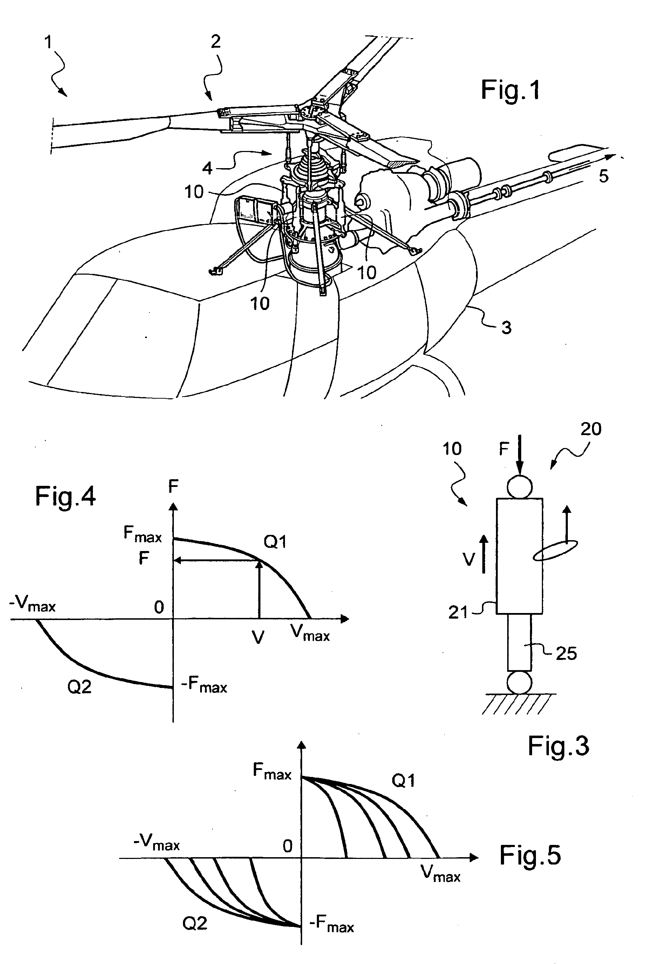

La figure 1 présente un aéronef 1, et plus particulièrement un giravion muni d'une cellule 3 portant un rotor principal 2 et un rotor arrière 5 non visible.

Cet aéronef 1 comprend alors un ensemble de plateaux cycliques 4 pour ajuster le pas des pales du rotor principal 2, cet ensemble de plateaux cycliques étant commandé par trois servocommandes 10 reliées à des commandes de vol non représentées sur la figure 1.

De même, la chaîne de commande commandant le pas des pales du rotor arrière 5 peut comprendre une servocommande non représentée sur cette figure 1.

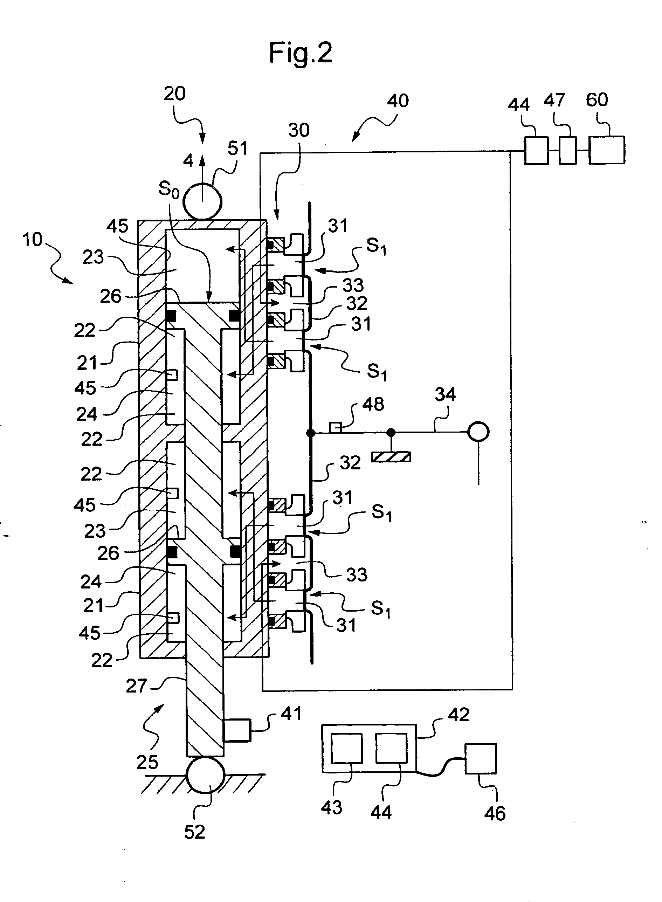

En référence à la figure 2, chaque servocommande 10 selon l'invention comporte un vérin 20 et un distributeur hydraulique 30, voire un dispositif d'asservissement incorporé ou non au distributeur hydraulique.

Ce vérin 20 comprend au moins un corps 21 coopérant avec un élément coulissant 25. Selon l'exemple représenté, le vérin 20 comprend deux corps 21.

En outre, chaque corps 21 définit un espace interne 22. Dés lors, l'élément coulissant 25 est pourvu d'une tige de puissance 27 portant un piston 26 par espace interne, chaque piston 26 coulissant dans l'espace interne 22 associé. Ainsi, chaque piston 26 délimite une chambre d'extension 23 et une chambre de rétraction 24 de l'espace interne associé.

Par ailleurs, le vérin 20 inclut des moyens de fixation à l'aéronef, tels qu'un moyen de fixation 51 du corps 21 et un moyen de fixation 52 de la tige de puissance 25. Conformément à la variante représentée, la servocommande étant une servocommande à corps mobile, le moyen de fixation 52 de la tige de puissance 25 est fixé à un élément fixe alors que le moyen de fixation 51 du corps 21 peut être fixé à l'ensemble de plateaux cycliques 4 par exemple.

Selon un autre aspect, le distributeur hydraulique 30 a pour fonction d'acheminer un fluide d'une source hydraulique 60 vers une chambre de chaque espace interne 22. Dès lors, le distributeur hydraulique 30 peut comprendre une unité hydraulique par espace interne, commandée chacune par un levier de commande 34.

Par exemple, chaque unité hydraulique comprend au moins un passage d'entrée 33 et deux ouvertures à section variable 31 de distribution aptes à être en liaison avec la chambre d'extension 23 et la chambre de rétraction 24 de l'espace interne 22 associé. Le levier de commande 34 coopère par suite avec un moyen de restriction 32 mobile pouvant obturer au moins partiellement ledit passage d'entrée et lesdites ouvertures.

Lorsque le levier de commande 34 est manoeuvré pour requérir l'extension du vérin 20, ce levier de commande 34 déplace le moyen de restriction 32 qui met en relation le passage d'entrée 33 et l'ouverture à section variable 31 reliée à la chambre d'extension 23 de l'espace interne. A l'inverse, l'ouverture à section variable 31 reliée à la chambre de rétraction 24 de l'espace interne peut être mise en communication avec un circuit hydraulique de retour de fluide.

De même, lorsque le levier de commande 34 est manoeuvré pour requérir la rétraction du vérin 20, ce levier de commande 34 déplace le moyen de restriction 32 qui met en relation le passage d'entrée 33 et l'ouverture à section variable 31 reliée à la chambre de rétraction de l'espace interne. A l'inverse, l'ouverture 31 reliée à la chambre d'extension 23 peut être mise en communication avec un circuit hydraulique de retour.

Ce distributeur hydraulique peut être du type décrit dans la littérature.

On note que la section courante à chaque instant de l'ouverture à section variable 31 alimentant en fluide l'espace interne, est une section variable en fonction de la position du levier de commande 34 et donc de la position du moyen de restriction 32.

Par ailleurs, la servocommande 10 comporte un dispositif 40 de détermination de l'effort statique exercé sur cette servocommande.

Ce dispositif 40 inclut un calculateur 42 muni d'un processeur 43 et d'une mémoire principale 44, le processeur 43 exécutant des instructions mémorisées dans la mémoire 44 pour déterminer cet effort statique.

Dès lors, le dispositif 40 comporte un capteur de mesure 41 de la vitesse de déplacement courante $\underline{V}$ de l'élément coulissant 25 par rapport au corps 21 de la servocommande 10. Le capteur de mesure 41 est alors relié au calculateur par une liaison filaire ou sans fil non représentée sur la figure 2.

Ce capteur de mesure 41 est éventuellement un capteur mesurant le déplacement relatif entre l'élément coulissant 25 et le corps 21. En dérivant les mesures transmises par le capteur de mesure par rapport au temps selon les instructions mémorisées dans la mémoire principale 44, le processeur détermine la vitesse de déplacement courante $\underline{V}$ de l'élément coulissant 25 par rapport au corps 21.

En référence à la figure 3, selon le procédé mis en oeuvre, pour déterminer un effort statique $\underline{F}$ exercé sur la servocommande 10, on détermine donc la vitesse de déplacement courante $\underline{V}$ de l'élément coulissant 25 par rapport au corps 21.

La figure 4 présente un diagramme représentant en abscisse cette vitesse de déplacement courante $\underline{V}$ de l'élément coulissant 25 par rapport au corps 21, et en ordonnée l'effort statique exercé sur la servocommande 10.

On constate que selon l'invention, cet effort statique est fonction de cette vitesse de déplacement courante $\underline{V}$.

Par suite, le processeur 43 exécute des instructions mémorisées dans la mémoire principale 44 pour déterminer l'effort statique en temps réel à l'aide des relations suivantes donnant l'effort statique courant exercé sur une servocommande en fonction de la vitesse de

déplacement courante $\underline{V}$, à savoir à l'aide :

- de la première relation suivante lorsque la vitesse de déplacement courante est positive :

$$F = F_{max} * [1 - (\frac{V^2}{V_{max}^2})],$$

- de la deuxième relation suivante lorsque la vitesse de déplacement courante est négative :

$$F = -F_{max} * [1 - (\frac{V^2}{V_{max}^2})],$$

où « F » représente l'effort statique courant développé par sur la servocommande 10, « $F_{max}$ » représente un effort statique maximal prédéterminé développable par la servocommande 10 éventuellement en valeur absolue pour être considéré positif, « $V^2$ » représente la vitesse de déplacement courante mesurée dudit élément coulissant 25 à la puissance deux, « $V_{max}^2$ » représente la vitesse de déplacement maximale dudit élément coulissant 25 à la puissance deux, « * » représente le signe de la multiplication.

On constate que la représentation graphique de ces première et deuxième relations présentent un premier segment associé à la première relation dans un quadrant positif Q1, et un deuxième segment associé à la deuxième relation dans un quadrant négatif Q2. On comprend qu'un segment est relatif à l'extension de la servocommande, alors qu'un autre segment est relatif à la rétraction de la servocommande.

De plus, selon la réalisation associée à la figure 4, la vitesse de déplacement maximale est une constante, égale à la vitesse maximale de déplacement relatif entre l'élément coulissant 25 et le corps 21 pour une ouverture à section variable 31 maximale de distribution du distributeur hydraulique et pour une température maximale du fluide par exemple.

Toutefois, la vitesse de déplacement maximale Vmax peut varier en fonction de la valeur courante de la section variable de cette ouverture.

Selon un mode de réalisation préféré, à chaque valeur possible de la vitesse de déplacement maximale Vmax, correspond alors une équation permettant d'obtenir l'effort statique.

La figure 5 montre ainsi un diagramme présentant l'effort statique en fonction de la vitesse de déplacement de l'élément coulissant 25 par rapport au corps 21.

On constate, selon ce mode de réalisation préféré, la présence d'une pluralité de segments par quadrant Q1, Q2, chaque segment d'un quadrant correspondant à une ouverture d'une section donnée. On comprend que plus la section d'une ouverture est grande, plus la vitesse de déplacement maximale est importante.

Ainsi, selon ce deuxième mode de réalisation, on détermine une valeur courante de la section variable de l'ouverture du distributeur hydraulique 30 alimentant en fluide l'espace interne.

Par suite, on détermine la vitesse de déplacement maximale $V_{max}$ en temps réel à l'aide de l'équation suivante :

$$V_{max} = C_q * S_1 * \frac{\sqrt{(\frac{2}{\rho}) * (P_{in} - P_{out})}}{S_0}$$

où « $C_q$ » représente un coefficient de perte de charge prédéterminé du distributeur hydraulique 30 , « $S_1$ » représente une valeur courante de la section variable de l'ouverture 31 alimentant en fluide l'espace interne, « p » représente la masse volumique du fluide, « $P_{in}$ » représente la pression d'alimentation du fluide entrant dans le distributeur hydraulique 30, « $P_{out}$ » représente la pression de sortie du fluide sortant du distributeur hydraulique et de fait du fluide présent dans une chambre 23, 24 de l'espace interne 22 alimentée par le distributeur hydraulique 30, « $S_0$ » représente la surface d'une section constante dudit piston 26,« * » représente le signe de la multiplication.

En référence à la figure 2, le dispositif 40 peut alors inclure un capteur d'ouverture 48 pour déterminer la valeur courante de la section variable de l'ouverture du distributeur hydraulique alimentant en fluide l'espace interne.

Ce capteur d'ouverture 48 peut être un capteur de position du levier de commande 34 relié au calculateur par une liaison non représentée sur les figures, à savoir une liaison filaire ou sans fil.

En fonction de la position du levier de commande, le processeur exécute des instructions de la mémoire principale pour en déduire la valeur courante $S_1$.

De plus, le dispositif 40 inclut un premier capteur de pression 44 de la pression d'alimentation $P_{in}$ relié au calculateur 42 par des liaisons filaires ou non filaires non représentées. De même, le dispositif 40 peut inclure au moins un deuxième capteur de pression 45 de la pression de sortie $P_{out}$ relié au calculateur 42 par des liaisons filaires ou non filaires non représentées sur les figures, une pluralité de capteurs agencés dans chaque chambre d'extension 23 et de rétraction 24 du corps 21 par exemple.

Le calculateur peut alors déterminer en temps réel la vitesse de déplacement maximale associée à une position donnée du distributeur hydraulique 40 à l'aide de l'équation programmée dans sa mémoire principale 44, pour en déduire l'effort statique exercé sur la servocommande.

Il est à noter que pour simplifier le dispositif 40, il est possible de considérer que la pression de sortie $P_{out}$ est proportionnelle à la moitié de la pression d'entrée $P_{in}$ selon un rapport de proportionnalité donné, voire égale à la moitié de la pression d'entrée $P_{in}$. Dès lors, il n'est pas nécessaire d'implémenter au moins un deuxième capteur de pression.

De plus, pour augmenter la précision du dispositif 40, ce dispositif 40 peut inclure un capteur de température 47 du fluide alimentant le distributeur hydraulique 30.

A l'aide de cette température du fluide et d'équations adaptés, le processeur du calculateur 42 exécute des instructions pour déterminer le coefficient de perte de charge $C_q$ et la masse volumique p en fonction de la température mesurée, à l'aide de moyens usuels de type bases de données, abaques ou équations par exemple.

Enfin, le dispositif 40 peut comprendre un moyen d'alerte 46. Dès lors, on peut activer le moyen d'alerte 46 lorsque l'effort statique dépasse un seuil prédéterminé.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Procédé de détermination de l'effort statique développé par une servocommande (10) munie d'un vérin (20) et d'un distributeur hydraulique (30), ledit vérin (20) comprenant au moins un corps (21) délimitant un espace interne (22) et un élément coulissant (25) muni d'un piston de commande (26) coulissant dans le.dit espace interne (22), ledit distributeur hydraulique (30) alimentant ledit espace interne (22) avec un fluide **caractérisé en ce que** :

     - on détermine la vitesse de déplacement courante relative dudit élément coulissant (25) par rapport audit corps (21) de la servocommande (10),
     - on détermine ledit effort statique à l'aide

         • de la première relation suivante lorsque la vitesse de déplacement courante est positive :

$$F = F_{\max} * [1 - (\frac{V^2}{V_{\max}^2})],$$

• de la deuxième relation suivante lorsque la vitesse de déplacement courante est négative :

$$F = -F_{\max} * [1 - (\frac{V^2}{V_{\max}^2})],$$

où « F » représente ledit effort statique développé par la servocommande (10), « $F_{\max}$ » représente un effort statique maximal prédéterminé développable par ladite servocommande (10), « $V^2$ » représente la vitesse de déplacement courante à la puissance deux, « $V_{\max}^2$ » représente la vitesse de déplacement maximale dudit élément coulissant (25) par rapport audit corps (21) à la puissance deux, « * » représente le signe de la multiplication.

2. Procédé selon la revendication 1,
   **caractérisé en ce que** :

   - on détermine la vitesse de déplacement courante (V) dudit élément coulissant (25) par rapport audit corps (21) de la servocommande (10) à l'aide d'un capteur de mesure de la vitesse de déplacement (41),
   - un calculateur (42) comprenant un processeur (43) et une mémoire principale (44) stockant des instructions relatives à ladite première relation et ladite deuxième relation, on détermine ledit effort statique à l'aide de ladite première relation et ladite deuxième relation en exécutant lesdites instructions avec ledit processeur (43).

3. Procédé selon l'une quelconque des revendications 1 à 2,
   **caractérisé en ce qu'**on détermine ladite vitesse de déplacement courante (V) en temps réel en déterminant un débit dudit fluide, puis en divisant ledit débit par la surface (S0) d'une section constante du piston.

4. Procédé selon l'une quelconque des revendications 1 à 2,
   **caractérisé en ce que**, ledit distributeur hydraulique (30) communiquant avec ledit espace interne (22) par une ouverture (31) à section variable, ce distributeur hydraulique (30) comprenant un moyen de restriction (32) mobile pour ajuster ladite section variable, on détermine une valeur courante de la section variable du distributeur hydraulique (30) puis on détermine la vitesse de déplacement maximale $V_{\max}$ en temps réel à l'aide de l'équation suivante :

$$V_{\max} = C_q * S_1 * \frac{\sqrt{(\frac{2}{\rho}) * (P_{in} - P_{out})}}{S_0}$$

où « $C_q$ » représente un coefficient de perte de charge prédéterminé du distributeur hydraulique (30), « $S_1$ » représente une valeur courante de la section variable, « $\rho$ » représente la masse volumique dudit fluide, « $P_{in}$ » représente la pression d'alimentation du fluide entrant dans ledit distributeur hydraulique (30), « $P_{out}$ » représente la pression de sortie sortant du distributeur hydraulique, « $S_0$ » représente la surface d'une section constante dudit piston (26) ,« * » représente le signe de la multiplication.

5. Procédé selon la revendication 4,
   **caractérisé en ce qu'**on détermine la vitesse de déplacement maximale $V_{\max}$ en temps réel à l'aide de l'équation en exécutant des instructions avec un processeur (43) d'un calculateur (42).

6. Procédé selon la revendication 4,
   **caractérisé en ce que** la pression de sortie ($P_{out}$) est proportionnelle la pression d'entrée ($P_{in}$).

7. Procédé selon la revendication 4,
   **caractérisé en ce qu'**on mesure la température dudit fluide, ledit coefficient de perte de charge ($C_q$) et ladite masse volumique ($\rho$) étant déterminés en fonction de ladite température.

8. Procédé selon l'une quelconque des revendications 1 à 7,
   **caractérisé en ce qu'**on déclenche une alerte lorsque ledit effort statique ($\underline{F}$) dépasse un seuil prédéterminé.

**Patentansprüche**

1. Verfahren zur Bestimmung der statischen Kraft, die von einer Servosteuerung (10) entwickelt wird, die eine Kolben-Zylinder-Einheit (20) und einen hydraulischen Verteiler (30) aufweist, wobei die Kolben-Zylinder-Einheit (20) mindestens einen Körper (21) aufweist, der einen Innenraum (22) begrenzt, und ein Gleitelement (25) mit einem Steuerkolben (26), der in dem Innenraum (22) gleitet, wobei der hydraulische Verteiler (30) den Innenraum (22) mit einem Fluid speist, **dadurch gekennzeichnet, dass**:

- man die aktuelle Geschwindigkeit der Relativbewegung des Gleitelements (25) bezüglich des Körpers (21) der Servosteuerung (10) bestimmt,
- man die statische Kraft bestimmt mit Hilfe

• der folgenden ersten Beziehung, wenn die aktuelle Bewegungsgeschwindigkeit positiv ist:

$$F = F_{max} * \left[ 1 - \left( \frac{V^2}{V^2_{max}} \right) \right] \,,$$

• der folgenden zweiten Beziehung, wenn die aktuelle Bewegungsgeschwindigkeit negativ ist:

$$F = - F_{max} * \left[ 1 - \left( \frac{V^2}{V^2_{max}} \right) \right]$$

wobei "F" die von der Servosteuerung (10) entwickelte statische Kraft bezeichnet, "$F_{max}$" eine maximale vorbestimmte statische Kraft bezeichnet, die von der Servosteuerung (10) entwickelbar ist, "$V^2$" das Quadrat der aktuellen Bewegungsgeschwindigkeit bezeichnet, "$V^2_{max}$" das Quadrat der maximalen Geschwindigkeit der Bewegung des Gleitelements (25) relativ zum Körper (21) bezeichnet, und "*" das Multiplikationszeichen bezeichnet.

2. Verfahren nach Anspruch 1,
**dadurch gekennzeichnet, dass**:

- man die aktuelle Geschwindigkeit (V) der Bewegung des Gleitelements (25) relativ zu dem Körper (21) der Servosteuerung (10) mit Hilfe eines Sensors (41) zur Messung der Bewegungsgeschwindigkeit bestimmt,
- ein Rechner (42) mit einem Prozessor (43) und einem Hauptspeicher (44) Befehle bezüglich der ersten Beziehung und der zweiten Beziehung speichert, wobei die statische Kraft mit Hilfe der ersten Beziehung und der zweiten Beziehung bestimmt wird, indem die Befehle mit dem Prozessor (43) ausgeführt werden.

3. Verfahren nach einem der Ansprüche 1 bis 2,
**dadurch gekennzeichnet, dass** die aktuelle Bewegungsgeschwindigkeit (V) in Echtzeit bestimmt wird, indem ein Durchsatz des Fluids bestimmt wird, und dieser Durchsatz durch die Fläche (S0) eines konstanten Querschnitts des Kolbens dividiert wird.

4. Verfahren nach einem der Ansprüche 1 bis 2,
**dadurch gekennzeichnet, dass** der Hydraulikverteiler (30) mit dem Innenraum (22) über eine Öffnung (31) mit variablem Querschnitt verbunden ist, wobei der Hydraulikverteiler (30) ein mobiles Begrenzungsmittel (32) aufweist, um den variablen Querschnitt einzustellen, wobei ein aktueller Wert des variablen Querschnitts des Hydraulikverteilers (30) bestimmt wird, und die maximale Bewegungsgeschwindigkeit ($V_{max}$) in Echtzeit mit Hilfe der folgenden Gleichung bestimmt wird:

$$V_{max} = C_q * S_1 * \frac{\sqrt{\left(\frac{2}{\rho}\right)*(P_{in}-P_{out})}}{S_0} \,,$$

wobei "$C_q$" einen vorbestimmten Druckverlustkoeffizienten des Hydraulikverteilers (30) bezeichnet, "$S_1$" einen aktuellen Wert des variablen Querschnitts bezeichnet, "p" die Dichte des Fluids bezeichnet, "$P_{in}$" den Speisedruck des Fluids beim Eintritt in den Hydraulikverteiler (30) bezeichnet, "$P_{out}$" den Ausgangsdruck des den Hydraulikverteiler verlassenden Fluids bezeichnet, "$S_0$" die Fläche eines konstanten Querschnitts des Kolbens (26) bezeichnet, und "*" das Multiplikationszeichen bezeichnet.

5. Verfahren nach Anspruch 4,
**dadurch gekennzeichnet, dass** man die maximale Bewegungsgeschwindigkeit $V_{max}$ in Echtzeit bestimmt mit Hilfe der Gleichung, indem man die Befehle mit einem Prozessor (43) eines Rechners (42) ausführt.

6. Verfahren nach Anspruch 4,
**dadurch gekennzeichnet, dass** der Ausgangsdruck ($P_{out}$) proportional zum Eingangsdruck ($P_{in}$) ist.

7. Verfahren nach Anspruch 4,
**dadurch gekennzeichnet, dass** man die Temperatur des Fluids misst, wobei der Druckverlustkoeffizient ($C_q$) und die Dichte (p) in Abhängigkeit von der Temperatur bestimmt werden.

8. Verfahren nach einem der Ansprüche 1 bis 7,
**dadurch gekennzeichnet, dass** ein Alarm ausgelöst wird, wenn die statische Kraft (F̱) einen vorbestimmten Wert überschreitet.

**Claims**

1. Method for determining the static force developed by a servo-control (10) provided with an actuator (20) and a hydraulic distributor (30), said actuator (20) comprising at least one body (21) defining an inside space (22) and a sliding element (25) provided with a control piston (26) sliding in said inside space (22), said hydraulic distributor (30) feeding said inside space (22) with a fluid, **characterised in that**:

- the relative instantaneous travel speed of said sliding element (25) relative to said body (21) of the servo-control (10) is determined,
- said static force is determined with the help of

• the following first relationship when the instantaneous travel speed is positive:

$$F = F_{max} * [1 - (\frac{V^2}{V_{max}^2})],$$

• the following second relationship when the instantaneous travel speed is negative:

$$F = -F_{max} * [1 - (\frac{V^2}{V_{max}^2})],$$

where "F" represents said static force developed by the servo-control (10), "$F_{max}$" represents a predetermined maximum static force that can be developed by said servo-control (10) "$V^2$" represents the instantaneous travel speed to the power of two, "$V_{max}^2$" represents the maximum travel speed of said sliding element (25) relative to said body (21) to the power of two, and "*" represents the multiplication sign.

2. Method according to Claim 1, **characterised in that**:

- the instantaneous travel speed (V) of said sliding element (25) relative to said body (21) of the servo-control (10) is determined with the help of a sensor for measuring the travel speed (41),
- with a computer (42) comprising a processor (43) and a main memory (44) storing instructions relating to said first relationship and to said second relationship, said static force is determined with the help of said first relationship and said second relationship by executing said instructions with said processor (43).

3. Method according to any one of Claims 1 to 2, **characterised in that** said instantaneous travel speed (V) is determined in real time by determining a flow rate of said fluid, and then by dividing said flow rate by the area (S0) of a constant section of the piston.

4. Method according to any one of Claims 1 to 2, **characterised in that**, with said hydraulic distributor (30) communicating with said inside space (22) via an opening (31) of variable section, said hydraulic distributor (30) comprising a movable restriction means (32) in order to adjust said variable section, an instantaneous value of the variable section of the hydraulic distributor (30) is determined and then the maximum travel speed $V_{max}$ is determined in real time with the help of the following equation:

$$V_{max} = C_q * S_1 * \frac{\sqrt{(\frac{2}{\rho}) * (P_{in} - P_{out})}}{S_0}$$

where "$C_q$" represents a predetermined head loss coefficient of the hydraulic distributor (30), "$S_1$" represents an instantaneous value of the variable section, "$\rho$" represents the density of said fluid, "$P_{in}$" represents the feed pressure of the fluid entering said hydraulic distributor (30), "$P_{out}$" represents the outlet pressure leaving the hydraulic distributor, "$S_0$" represents the area of a constant section of said piston (26), and "*" represents the multiplication sign.

5. Method according to Claim 4, **characterised in that** the maximum travel speed $V_{max}$ is determined in real time with the help of the equation by executing instructions with a processor (43) of a computer (42).

6. Method according to Claim 4, **characterised in that** the outlet pressure ($P_{out}$) is proportional to the inlet pressure ($P_{in}$).

7. Method according to Claim 4, **characterised in that** the temperature of said fluid is measured, said head loss coefficient ($C_q$) and said density ($\rho$) being determined as a function of said temperature.

8. Method according to any one of Claims 1 to 7, **characterised in that** a warning is triggered when said static force (F) exceeds a predetermined threshold.

1

2

Fig.1

4

10

10

5

10

10

3

20

10

F

Fig.4

F

$F_{max}$

Q1

V

$-V_{max}$

0

$V_{max}$

$-F_{max}$

Q2

21

V

25

Fig.3

$F_{max}$

Q1

$-V_{max}$

0

$V_{max}$

Fig.5

Q2

$-F_{max}$

# Fig.2

**EP 2 527 660 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008095525 A
- US 20040128868 A
- US 20100294125 A